# EUROPÄISCHE PATENTSCHRIFT

(11) **EP 3 124 199 B1**
(45) Veröffentlichungstag und Bekanntmachung des Hinweises auf die Patenterteilung: **05.09.2018**
(21) Anmeldenummer: 16181142.7
(22) Anmeldetag: 26.07.2016
(51) Int. Cl.: B29C 47/00, B29C 47/90, B29C 47/08

(54) **STUFENLOS EINSTELLBARE KALIBRIERHÜLSE FÜR EXTRUDIERTE KUNSTSTOFFROHRE**
INFINITELY ADJUSTABLE CALIBRATION SLEEVE FOR EXTRUDED PLASTIC PIPES
DOUILLE DE CALIBRAGE REGLABLE EN CONTINU POUR TUYAUX EN MATIERE PLASTIQUE EXTRUDES

(30) Priorität: 27.07.2015 DE 102015009528
(43) Veröffentlichungstag der Anmeldung: 01.02.2017
(73) Patentinhaber: INOEX GmbH, 49324 Melle (DE)
(72) Erfinder: Corley, Brian, 49324 Melle (DE)
(74) Vertreter: Bremer, Ulrich

(56) Entgegenhaltungen:
- DE-A1-102005 062 138
- DE-B3- 10 318 137
- DE-B3-102004 029 498

## Beschreibung

Die vorliegende Erfindung betrifft eine stufenlos einstellbare Kalibrierhülse für extrudierte Kunststoffrohre gemäß dem Oberbegriff des Anspruchs 1.

Eine gattungsgemäße Kalibrierhülse, die im laufenden Betrieb auf unterschiedliche Außendurchmesser von herzustellenden Kunststoffrohren einstellbar ist, ist aus der DE 103 18 137 B3 bekannt. Diese Kalibrierhülse besitzt einen starren Einlaufring, an dem zwei Lagen von flexiblen Bändern befestigt sind. Diese Bänder kreuzen sich nach Art eines Scherengitters und sind an Kreuzungspunkten gelenkig miteinander verbunden. Der für die Kalibrierung der extrudierten Kunststoffrohre wesentliche Innendurchmesser der Kalibrierhülse wird durch auseinander ziehen beziehungsweise zusammen drücken des Scherengitters verändert. Diese Kalibrierhülse zeichnet sich durch einen großen Stellbereich bei hoher Eigensteifigkeit aus. Desweiteren garantiert die Vielzahl der sich kreuzenden, miteinander gelenkig verbundenen Bänder eine absolut kreisrunde Form der Kalibrierhülse bei jedem eingestellten Durchmesser.

Die aus der DE 103 18 137 B3 bekannte Kalibrierhülse hat den Vorteil, dass sie sehr einfach und preisgünstig gebaut ist. Dem steht nachteilig gegenüber, dass im Einlaufbereich der Kalibrierhülse aufgrund der sich verwindenden Bänder keine exakte Führung des zu kalibrierenden Schmelzeschlauches gegeben ist und es somit zu Beeinträchtigungen der Oberflächengüte des extrudierten Kunststoffrohres kommt.

Diese Nachteile werden mit einer in der DE 10 2004 029 498 B3 beschriebenen Kalibrierhülse vermieden. Der Einlauf dieser Kalibrierhülse ist durch Segmentierung radial verstellbar. Dazu sind auf seinem Umfang radial verstellbare Segmente angeordnet, die eine exakte Einstellung des Einlaufs auf den zu kalibrierenden Rohrdurchmesser gestattet, das heißt, die Segmente und die beiden Bänderlagen werden koordiniert und gleichzeitig auf den zu kalibrierenden Durchmesser eingestellt. Stauchungen des extrudierenden Kunststoffrohres im Einlaufbereich der Kalibrierhülse werden damit verhindert. Das hat auch positive Auswirkungen auf die Oberflächengüte der produzierten Kunststoffrohre. Die zur Anlage an das zu kalibrierende Kunststoffrohr ausgebildeten Stirnseiten der Segmente gewährleisten durch einen umlaufenden Kontakt mit dem Kunststoffrohr die Abdichtung des Vakuumtanks gegenüber der Umgebung. Geringfügige Unrundheiten zwischen der durch die Stirnseiten der Segmente gebildeten Umfangsfläche (Polygon) und dem extrudierten Kunststoffrohr werden durch die an dieser Stelle des Produktionsganges noch formbarer Masse des Kunststoffrohres kompensiert.

Die oben beschriebenen Vorteile der Kalibrierhülse werden mit einer aufwendigen Konstruktion des segmentierten, radial verstellbaren Einlaufringes erkauft.

Eine weitere gattungsgemäße Kalibrierhülse ist aus der DE 10 2005 062 138 A1 bekannt. Allerdings ist diese Kalibrierhülse nicht für einen kompletten Dimensionswechsel im laufenden Betrieb geeignet, das heißt, sie kann nicht von einem Rohrnenndurchmesser auf einen anderen Rohrnenndurchmesser verstellt werden. Vielmehr ist der Innendurchmesser dieser Kalibrierhülse im laufenden Betrieb nur in engen Grenzen veränderbar. Diese Änderung des Innendurchmessers der Kalibrierhülse dient dazu, Kunststoffrohre eines Nenndurchmessers, aber unterschiedlicher Wandstärke und somit unterschiedlichen Schrumpfverhaltens innerhalb der geforderten Toleranzgrenze herzustellen.

Aufgabe der vorliegenden Erfindung ist es, eine Kalibrierhülse für einen Dimensionswechsel im laufenden Betrieb zur Verfügung zu stellen, mit der bei einfachem Aufbau Stauchungen und Beeinträchtigungen der Oberflächengüte des einlaufenden Kunststoffrohres vermieden werden.

Diese Aufgabe wird erfindungsgemäß mit einer Kalibrierhülse gelöst, die die Merkmale des Anspruchs 1 aufweist.

Die erfindungsgemäß im Einlaufbereich der Kalibrierhülse vorgesehenen Ausgleichsbänder gleichen die Relativbewegungen des hohlzylindrischen Bereichs der Kalibrierhülse zum starren Einlaufring aus. Wird die Kalibrierhülse gestreckt, also im Durchmesser verringert, federn die Ausgleichsbänder nach innen ein, während sie beim Stauchen der Kalibrierhülse, also bei einer Durchmesservergrößerung, nach außen federn.

Die erfindungsgemäße Lösung hat große Kostenvorteile, da im Einlauf nur sehr wenige Teile erforderlich sind, insbesondere keine beweglichen Teile und keine Antriebe. Dadurch ist auch der Wartungsaufwand deutlich geringer. Ferner bilden die vielen auf dem Umfang verteilten Ausgleichsbänder einen perfekten kreisrunden Einlauf, da sie sich nur in ihrer Ebene verformen, d.h. nicht verdrehen, woraus weniger Einlaufabzeichnungen auf der Rohroberfläche resultieren. Desweiteren bestehen keine Lücken im Einlauf, die zur Vakuumdichtung mit Wasser abgedichtet werden müssen, wodurch die Wassereinstellung für den Einlauf deutlich einfacher wird und woraus weniger Wasserabzeichnungen auf der Rohroberfläche resultieren.

Die Ausgleichsbänder können durch ihre Ausführung und Befestigung selbst große Verformungen nahezu spannungsfrei aufnehmen, während die Kalibrierhülse in ihrem Funktionsbereich immer exakt hohlzylindrisch bleibt. Daraus resultieren die folgenden unmittelbaren Vorteile, die bisher nur mit hochkomplizierten und aufwändig segmentierten Einläufen erzielt werden können: ein deutlich größerer Verstellbereich von mehr als 20 %, ausgehend vom kleinsten möglichen Durchmesser des produzierten Rohres, gegenüber weniger als 10 % bei den bekannten mechanisch einfachen technischen Lösungen und eine geringere mechanische Belastung, da alle Deformationen von den Ausgleichsbändern aufgenommen werden.

Weitere vorteilhafte Ausgestaltungen der Erfindung ergeben sich aus den Unteransprüchen.

Die Erfindung wird nachstehend anhand eines Ausführungsbeispieles näher erläutert. In der dazugehörigen Zeichnung zeigt:
- Fig. 1: eine Extrusionsanlage zur Herstellung von Kunststoffrohren mit ihren Hauptkomponenten in schematischer Darstellung,

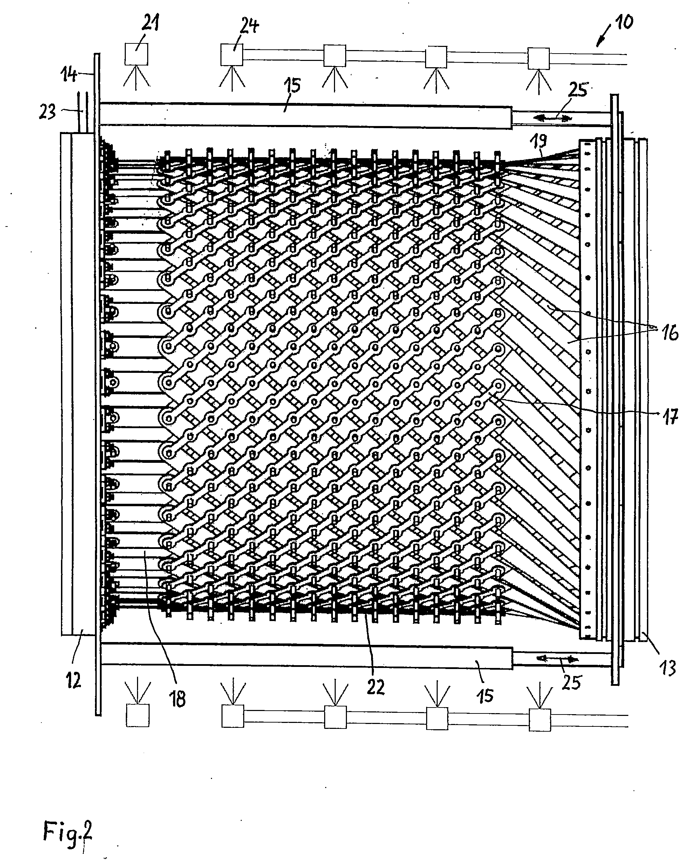

- Fig.2: einen vergrößerten Ausschnitt A gemäß Figur 1,
- Fig. 3: einen Längsschnitt durch den unteren Teil der Kalibrierhülse bei großem Durchmesser,
- Fig. 4: eine Darstellung gemäß Figur 3 bei mittlerem Durchmesser, und
- Fig. 5: eine Darstellung gemäß Figur 3 bei kleinem Durchmesser.

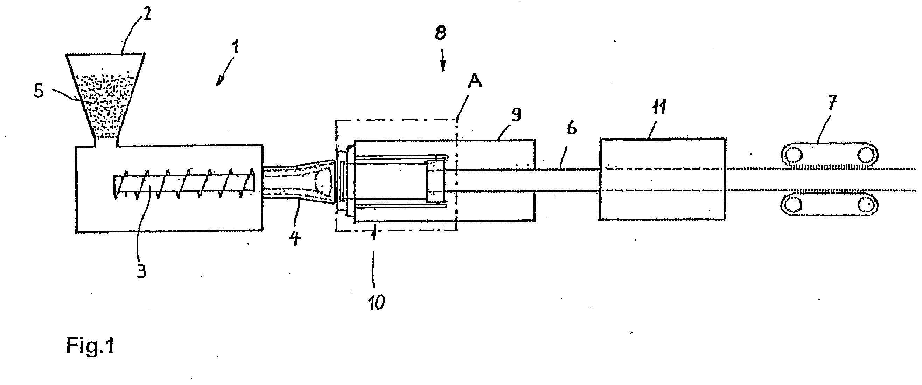

Die in Figur 1 dargestellte Extrusionsanlage umfasst eine Extrudereinheit 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform der Extrudereinheit 1 zugeführt. In der Extrudereinheit 1 wird das Granulat bzw. Pulver erwärmt, geknetet und plastifiziert. Anschließend wird der Kunststoff als verformbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird das heiße, hier als Schmelzeschlauch vorliegende und damit noch verformbare Rohr 6 mittels einer am Ende der Extrusionslinie angeordneten Abzugseinheit 7 durch eine Kalibrier- und Kühleinheit 8 gezogen, die einen Vakuumtank 9 mit einer an dessen Eingang angeordneten, perforierten Kalibrierhülse 10 aufweist. Die Kalibrierhülse 10 ist stufenlos im Durchmesser einstellbar, sodass das extrudierte noch verformbare Rohr 6 auf seinen gewünschten Wert fixiert werden kann. Nach dem Verlassen der Kalibrier-und Kühleinheit 8 tritt das Rohr 6 in eine Kühlstrecke 11 ein, in der es auf Raumtemperatur abgekühlt wird.

Der Aufbau der Kalibrierhülse 10 wird nachstehend näher beschrieben.

Die Kalibierhülse 10 besitzt einen starren Einlaufring 12 und einen starren Auslaufring 13 sowie einen perforierten hohlzylindrischen Bereich 22 mit einem Übergang zum Einlaufring 12 und einem Übergang zum Auslaufring 13, wie weiter unten noch näher beschrieben wird. Während der Einlaufring 12 von außen an eine Adapterscheibe 14 zur stirnseitigen Montage an den Vakuumtank 9 angeschraubt ist, befindet sich der Auslaufring 13 im Vakuumtank 9. Der Auslaufring 13 hat einen Innendurchmesser, der mindestens dem größten in der Extrusionsanlage zur fahrenden Rohrdurchmesser entspricht. Er ist gegenüber dem ortsfesten Einlaufring 12 in Axialrichtung der Kalibrierhülse 10 verlagerbar. Dazu sind mindestens zwei nur schematisch dargestellte Linearantriebe 15 vorgesehen. Je nach Antriebsrichtung (Pfeile 25) der Linearantriebe 15 bewegt sich der Auslaufring 13 entweder vom Einlaufring 12 weg bzw. auf diesen zu.

Zwischen dem Einlaufring 12 und dem Auslaufring 13 sind zwei Bänderlagen 16, 17 mit flexiblen Bändern angeordnet, die sich nach Art eines Scherengitters kreuzen und an den Kreuzungspunkten gelenkig miteinander verbunden sind. Die beiden Bänderlagen 16, 17 bilden zusammen den perforierten hohlzylindrischen Bereich 22 der Kalibrierhülse 10, wobei die Perforationen durch zwischen den beiden Bänderlagen 16, 17 bestehende Lücken gebildet sind. Auf der Seite des Auslaufringes 13 enden die Bänder der Bänderlage 17 im axialen Abstand vom Auslaufring 13 und nur die Bänder der Bänderlage 16 sind, den Übergang vom hohlzylindrischen Bereich 22 bildend, bis zum Auslaufring 13 fortgeführt und drehgelenkig an diesen angeschlagen. Auf der Seite des Einlaufringes 12 ist der Übergang vom hohlzylindrischen Bereich 22 der Kalibrierhülse 10 zum Einlaufring 12 durch Ausgleichsbänder 18 gebildet, wie weiter unten noch näher erläutert wird.

Der Durchmesser des durch die Bänderlagen 16, 17 gebildeten hohlzylindrischen Bereichs 22 ist veränderbar, in dem der Auslaufring 13 über die Linearantriebe 15 verstellt wird. Bei Verstellung des Auslaufringes 13 zum Einlaufring 12 hin wird der Durchmesser vergrößert. Durch Verlagerung des Auslaufringes 13 vom Einlaufring 12 weg verringert sich der Durchmessers des hohlzylindrischen Bereichs 22. Je nach dessen Auszugsgrad ergibt sich am Übergang zum Auslaufring 13 ein mehr oder weniger starker Konus 19.

Die Ausgleichsbänder 18 sind mit ihrem einem Ende an den Einlaufring 12 angeschraubt, also starr mit diesem verbunden. Sie ragen in einer Vielzahl auf den Umfang des Einlaufringes 12 verteilt von diesem in axialer Richtung zum Auslaufring 13 ab. Das andere Ende der Ausgleichsbänder 18 nimmt jeweils drehgelenkig einen endseitigen Kreuzungspunkt der Bänderlagen 16, 17 auf. Die Ausgleichsbänder 18 bestehen aus Federstahl oder einem anderen ausreichend festen und elastischen Werkstoff. Sie gleichen einen bestehenden Durchmesserunterschied zwischen dem Einlaufring 12 und dem hohlzylindrischen Bereich 22 der Kalibrierhülse 10 durch Verformung aus.

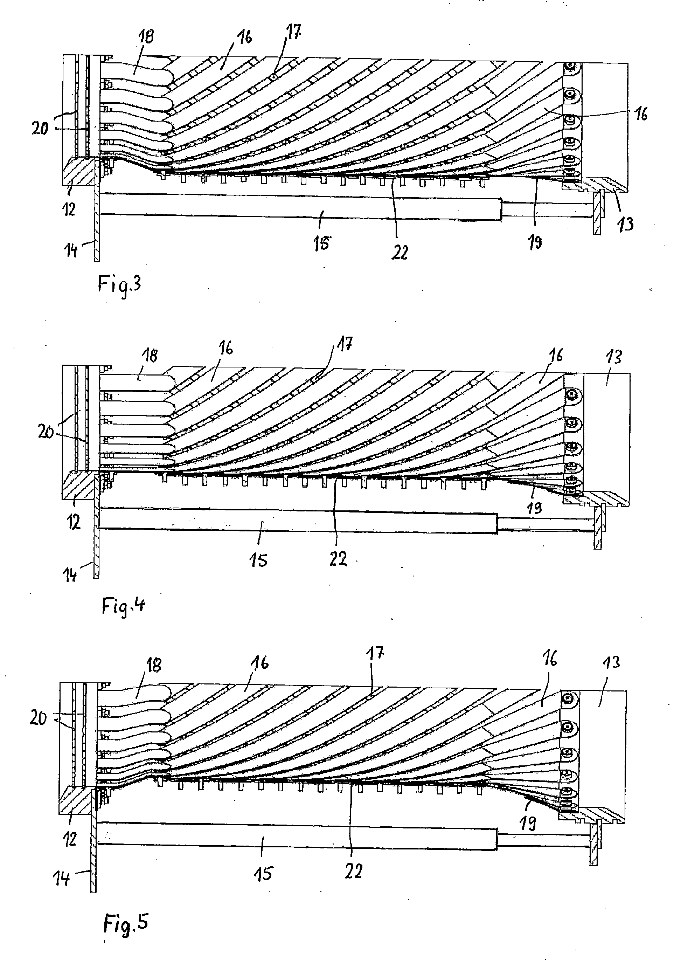

Wird der hohlzylindrische Bereich 22 der Kalibrierhülse 10 auf einen mittleren Durchmesser eingestellt, was in Figur 4 dargestellt ist, nehmen die Ausgleichsbänder 18 eine neutrale Stellung ein, in der sie im Wesentlichen nicht deformiert sind. Wird die Kalibrierhülse 10 ausgehend von dieser Situation gestaucht, also im Durchmesser vergrößert, so federn die Ausgleichsbänder 18 mit ihren mit den Bänderlagen 16, 17 verbundenen Enden nach außen und kompensieren so die Durchmesserdiskrepanz zwischen dem hohlzylindrischen Bereich 22 und dem Einlaufring 12 (Fig. 3). Wird, ausgehend von der Darstellung gemäß Figur 4, die Kalibrierhülse 10 auf einen kleineren Durchmesser eingestellt, federn die mit den Bänderlagen 16, 17 verbundenen Enden der Ausgleichsbänder 18 nach innen ein, wie in Figur 5 dargestellt ist.

Der aus dem Extrusionswerkzeug 4 kommende Schmelzeschlauch läuft immer mit gleich definiertem Übermaß in die Kalibrierhülse 10 ein. Zur gezielten Verzögerung des eigentlichen Kalibriervorganges bis zum hohlzylindrischen Bereich 22 der Kalibrierhülse 10 wird der Einlaufbereich mit temperiertem Wasser, vorzugsweise mit einer Temperatur von etwa 80°Celsius, versorgt, welches gleichzeitig als Gleitmittel wirkt Dazu ist der Einlaufring 12 mit einem Wasseranschluss 23 und mit entsprechenden Wasserauslässen 20 versehen. Im Bereich der Ausgleichsbänder 18 sind zusätzlich Warmwasser-Sprühdüsen 21 angeordnet. Der Einlaufring 12 besteht zudem aus einem gut wärmeleitenden Material, zum Beispiel aus Messing oder Rotguss. Durch die Verlangsamung des Erstarrens des Schmelzeschlauchs im Einlaufbereich der Kalibrierhülse 10 wird in Verbindung mit dem eingespeisten Wasser zum einen eine sehr gute Abdichtung erreicht, um leichter einen Unterdruck im Vakuumtank 9 aufzubauen, und zugleich werden auch weniger Spannungen in das Rohr 6 eingebracht.

Im hohlzylindrischen Bereich 22 der Kalibrierhülse 10 sind Kaltwasser-Sprühdüsen 24 vorgesehen, über die das mit seiner Außenseite an die innere Bänderlage 16 angepresste extrudierte Rohr 6 abgekühlt und somit auf das gewünschte Maß fixiert wird.

## Patentansprüche

1. Kalibrierhülse für extrudierte Kunststoffrohre mit einem starren ortsfesten Einlaufring (12) und einen starren axial zum Einlaufring (12) verstellbaren Auslaufring (13), sowie mit einer ersten Bänderlage (16) mit schräg zur Längsachse der Kalibrierhülse (10) verlaufenden flexiblen Bändern und einer zweiten Bänderlage (17) mit flexiblen Bänder, wobei sich die Bänder der ersten Bänderlage (16) mit den Bändern der zweiten Bänderlage (17) nach Art eines ausziehbaren Scherengitters kreuzen und an Kreuzungspunkten drehgelenkig miteinander verbunden sind, und wobei die Enden der Bänder der ersten oder zweiten Bänderlage (16, 17) drehgelenkig am Auslaufring (13) befestigt sind und die Bänder der anderen Bänderlage (16, 17) in einem axialen Abstand vom Auslaufring (13) enden, **dadurch gekennzeichnet, dass** die benachbart dem Einlaufring (12) angeordneten, endseitigen Kreuzungspunkte der Bänderlagen (16, 17) jeweils drehgelenkig mit einem Ende eines sich axial erstreckenden flexiblen Ausgleichsbandes (18) verbunden sind, dessen anderes Ende starr am Einlaufring (12) befestigt ist, wobei die flexiblen Ausgleichsbänder (18) einen Durchmesserunterschied zwischen dem Einlaufring (12) und einem hohlzylindrischen Bereich (22) der Kalibrierhülse (10) durch Verformung ausgleichen.

2. Kalibrierhülse nach Anspruch 1, **dadurch gekennzeichnet, dass** die Ausgleichsbänder (18) aus Federstahl gefertigt sind.

3. Kalibrierhülse nach Anspruch 1 oder 2, **dadurch gekennzeichnet, dass** der Einlaufring (12) einen Warmwasseranschluss (23) aufweist und mit Wasserauslässen (20) versehen ist.

4. Kalibrierhülse nach einem der vorstehenden Ansprüche, **dadurch gekennzeichnet, dass** im Bereich der Ausgleichsbänder (18) Warmwasser-Sprühdüsen (21) angeordnet sind.

## Claims

1. Calibration sleeve for extruded plastic pipes with a rigid fixed inlet ring (12) and a rigid outlet ring (13) adjustable axially to the inlet ring (12), as well as with a first band layer (16) with flexible bands running obliquely to the longitudinal axis of the calibration sleeve (10) and a second band layer (17) with flexible bands, wherein the bands of the first band layer (16) intersect with the bands of the second band layer (17) in the manner of an extendable sliding lattice grate and are connected with each other pivotably at points of intersection, and wherein the ends of the bands of the first or second band layer (16, 17) are secured pivotably on the outlet ring (13) and the bands of the other band layer (16,1 17) end at an axial distance from the outlet ring (13), **characterised in that** the end-side intersection points of the band layers (16, 17), arranged adjacent to the inlet ring (12), are in each case connected pivotably to an end of an axially extending, flexible compensating band (18), the other end of which is rigidly secured on the inlet ring (12), wherein the flexible compensating bands (18) compensate for a diameter difference between the inlet ring (12) and a hollow-cylindrical region (22) of the calibration sleeve (10) by deformation.

2. Calibration sleeve according to Claim 1, **characterised in that** the compensating bands (18) are made from spring steel.

3. Calibration sleeve according to Claim 1 or 2, **characterised in that** the inlet ring (12) has a warm-water connection (23) and is provided with water outlets (20).

4. Calibration sleeve according to any one of the preceding claims, **characterised in that** warm-water spray nozzles (21) are arranged in the region of the compensating bands (18).

## Revendications

1. Manchon de calibrage pour tuyaux en matière artificielle extrudés avec un anneau d'entrée rigide, stationnaire (12) et un anneau de sortie rigide (13) réglable axialement par rapport à l'anneau d'entrée (12), ainsi qu'avec une première couche de bandes (16) comportant des bandes flexibles s'étendant de façon oblique par rapport à l'axe longitudinal du manchon de calibrage (10) et une seconde couche de bandes (17) comportant des bandes flexibles, les bandes de la première couche de bandes (16) et les bandes de la seconde couche de bandes (17) se croisant à la manière d'un treillis extensible et étant reliées les unes aux autres de façon pivotante aux points de croisement, et les extrémités des bandes de la première ou seconde couche de bandes (16, 17) étant fixées de façon pivotante à l'anneau de sortie (13) et les bandes de l'autre couche de bandes (16, 17) se terminant avec un écart axial par rapport à l'anneau de sortie (13), **caractérisé en ce que** les points de croisement côté extrémités des couches de bandes (16, 17) disposés au voisinage de l'anneau d'entrée (12) sont respectivement reliés de façon pivotante à une extrémité d'une bande flexible de compensation (18) s'étendant axialement, dont l'autre extrémité est fixée de manière rigide à l'anneau d'entrée (12), les bandes flexibles de compensation (18) compensant par déformation une différence de diamètre entre l'anneau d'entrée (12) et une zone cylindrique creuse (22) du manchon de calibrage (10).

2. Manchon de calibrage suivant la revendication 1, **caractérisé en ce que** les bandes de compensation (18) sont fabriquées en acier ressort.

3. Manchon de calibrage suivant la revendication 1 ou 2, **caractérisé en ce que** l'anneau d'entrée (12) présente un raccord d'eau chaude (23) et est pourvu de sorties d'eau (20).

4. Manchon de calibrage suivant une des revendications précédentes, **caractérisé en ce que** des buses de pulvérisation d'eau chaude (21) sont disposées dans la zone des bandes de compensation (18).
